(19) 

Europäisches Patentamt
European Patent Office
Office européen des brevets

(11) **EP 2 731 218 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(51) Int Cl.:
*H02H 7/085* (2006.01)     *H02M 7/5387* (2007.01)
*H02P 6/00* (2016.01)     *H02P 29/00* (2016.01)

(21) Anmeldenummer: **12401222.0**

(22) Anmeldetag: **08.11.2012**

(54) **Frequenzumrichter zum Betreiben eines elektrischen Motors, mechatronisches System und elektrisches Gerät**

Frequency converter for operating an electric motor, mechatronic system and electric device

Convertisseur de fréquence pour l'actionnement d'un moteur électrique, système mécatronique et appareil électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.05.2014 Patentblatt 2014/20**

(73) Patentinhaber: **Miele & Cie. KG**
**33332 Gütersloh (DE)**

(72) Erfinder:
• **Femmer, Uwe**
  **33330 Gütersloh (DE)**
• **Neufeld, Alexander**
  **33619 Bielefeld (DE)**

(56) Entgegenhaltungen:
**EP-A2- 0 247 996**     **EP-A2- 2 409 630**
**WO-A1-2005/109592**     **CH-A- 534 444**
**DE-A1- 19 812 315**     **US-B2- 6 992 448**

EP 2 731 218 B1

**Beschreibung**

Die Erfindung betrifft einen Frequenzumrichter zum Betreiben eines elektrischen Motors, umfassend einen Gleichrichter, einen Wechselrichter mit gesteuerten Halbbrücken, zum Ein - und Ausschalten der Stromzufuhr für zumindest eine Wicklung eines ein -phasigen oder mehrphasigen elektrischen Motor, und eine Steuereinrichtung zum Ansteuern der Halbbrücken und Erfassung des den einzelnen Wicklungen zugeführten Stromes.

Aus der EP 0 247 996 A2 ist eine Vorrichtung zum Überwachen des Stromes in einem Drehstrommotor bekannt. Hierbei wird das Stromsignal an einem gemeinsamen Pol des Gleichspannungszwischenkreises mittels eines Messwiderstandes in der Leitung erfasst, wobei das Stromsignal aufintegriert und in Abhängigkeit dieses Ergebnisses die Stromzufuhr zum Umrichter und damit zum Motor abgeschaltet wird. Hierbei ist jedoch nicht sichergestellt, dass alle unzulässigen Betriebszustände, die zu einer Überhitzung führen können, erfasst werden. Ferner sind zahlreiche Bauteile für die Vorrichtung zur Erfassung des Stromes im gemeinsamen Pol des Gleichspannungszwischenkreises notwendig, die eine recht filigrane Kalibrierung erfordern.

Weiterer Stand der Technik ist aus WO 2005/109592A1, EP 2 409 630 A2 bzw. US 6 992 448 B2 bekannt.

Der Erfindung liegt somit die Aufgabe zu Grunde, auf einfache Weise einen Frequenzumrichter bereitzustellen, bei dem auf einfache Weise eine thermische Belastung von einzelnen Bauteilen des Frequenzumrichters und / oder im Motor zur Vermeidung von thermischen Überlastungen zuverlässig überwacht wird.

Erfindungsgemäß wird die Aufgabe durch ein mechatronisches System gemäß Anspruch 1 und durch ein elektrisches

Gerät nach Anspruch 14 gelöst. Vorteilhafte Ausgestaltungen und Weiterbildungen der Erfindung ergeben sich aus den jeweils nachfolgenden abhängigen Ansprüchen.

Die mit der Erfindung erreichbaren Vorteile bestehen neben der zuverlässigen Überwachung einer Erwärmung des Umrichters und / oder des Motors darin, dass keinerlei komplizierte Erfassungsmittel notwendig sind, sodass ein sehr einfacher und kostengünstiger Aufbau des Frequenzumrichters erreicht wird. Hierzu wird die Vorrichtung zur Erfassung des Gesamtstromes dadurch gebildet, dass ein Summenstrom mittels der ohnehin erfassten Phasenströme durch die Steuereinrichtung ermittelt wird, sodass die bereits vorhandene Steuereinrichtung in Wirkverbindung durch die entsprechende Berücksichtigung der erfassten, den jeweiligen Motorwicklungen zugeführten Strömen ein Maß für die Erwärmung des Frequenzumrichters, einzelnen Komponenten dazu und/ oder des Motors ermittelt werden können.

Dabei ist zumindest in einer der Zuführungsleitungen der Stromversorgung für den Frequenzumrichter ein Dämpfungselement zur Dämpfung von in die Leitung rückindizierten Oberwellen angeordnet. Hierbei kann als Dämpfungselement eine in die Zuführungsleitung geschaltete Drossel oder Spule eingesetzt werden. Ein Maß für die Erwärmung dieses Dämpfungselementes bzw. der Drossel wird dabei anhand der oben genannten Plausibilitätsprüfung ermittelt, wobei der Grenzwert aufgrund der Temperaturbeständigkeit und weiterer Parameter, wie Widerstand und Wärmeabstrahlvermögen des Dämpfungselementes selbst festgelegt ist.

Die Vorrichtung ist dabei zweckmäßiger dazu eingerichtet, anhand des ermittelten Summenstromes eine in dem Dämpfungselement bzw. Drossel erzeugte Leistung zu ermitteln. Da aufgrund der Überwachung eine unzulässige Erwärmung des Dämpfungselementes vermieden werden kann, reicht es aus, wenn das Dämpfungselement für den Nennbetrieb des Motors dimensioniert ist. Eine sogenannte Überdimensionierung des Bauteils wegen möglicher Überlastfälle in Fehlersituationen ist hierbei nicht notwendig.

In einer vorteilhaften Ausführung ist die Vorrichtung ferner dazu eingerichtet, ein Maß für eine thermische Belastung des Dämpfungselementes anhand einer Plausibilitätsprüfung aus dem ermittelten Strom in der Zuführungsleitung oder in der in dem Dämpfungselement erzeugten Leistung in einem zeitlichen Verlauf zu ermitteln. Dadurch wird sehr zuverlässig die dem Dämpfungselement zugeführte Energie ermittelt und das Energieabgabevermögen mit einbezogen. Das bedeutet, solange die zugeführte Energie größer ist, als die abgegebene, ergibt sich eine ansteigende Erwärmung des Bauteils. Die zugeführte Energie resultiert hierbei aus dem Bauteil zugeführten Strom und dem Wirkwiderstand bzw. wärmeverursachenden Widerstand. Die maximale Erwärmung ist dabei als Grenzwert definiert, der noch nicht zu einer unzulässigen Zerstörung oder einer vom Bauteil ausgehenden Brandgefahr führt.

In einer weiteren Ausführung ist die Vorrichtung ferner dazu eingerichtet, ein Maß für eine thermische Belastung des Dämpfungselementes oder des Motors oder des Umrichters anhand eines mathematischen Modells für das thermische Verhalten des Umrichters eines Bauteils und/oder des Motors aus dem ermittelten Strom in der Zuführungsleitung oder in der in dem Dämpfungselement erzeugten Leistung in einem zeitlichen Verlauf zu ermitteln. Das Modell kann als Werteliste im Speicher der Steuerung gespeichert sein, sodass mit einfachen und schnellen Rechenoperationen oder Wertevergleichen eine zuverlässige Plausibilitätsprüfung durchgeführt werden kann.

In einer vorteilhaften Ausführung ist die Vorrichtung dazu ausgebildet, als Plausibilitätsprüfung eine Summierung von einzelnen Leistungswerten oder Stromwerten, die aus der Differenz eines jeweils erfassten Leistungswertes oder Stromwertes mit einen vorbestimmten Grenzwert gebildet sind, durchzuführen. Dadurch wird mittels sehr einfachen Rechenoperationen ein zuverlässiges Verhalten der Erwärmung des Frequenzumrichters bzw. des Dämpfungselements in der Zuführungsleitung und/oder der Motorwicklungen erreicht.

In einer anderen Ausführung ist die Vorrichtung dazu ausgebildet, als Plausibilitätsprüfung eine mathematische Operation in Form einer Integralbildung von einzelnen Leistungswerten oder Stromwerten, die aus der Differenz eines jeweils erfassten Leistungswertes oder Stromwertes mit einen vorbestimmten Grenzwert gebildet sind, durchzuführen. Diese Rechenoperation ist recht einfach durchzuführen.

In einer insgesamt vorteilhaften Ausführung ist die Vorrichtung dazu ausgebildet, die Stromzuführung zu den einzelnen Wicklungen durch Abschalten der Halbbrücken zu unterbinden bzw. zu unterbrechen, wenn ein vorbestimmter Grenzwert für die Summe oder des Integrals des Leistungswertes oder Stromwertes erreicht oder überschritten ist. Somit sind keine weiteren Bauteile, wie elektromechanische Schalter oder elektronische Schalter notwendig. Die ohnehin vorhandenen elektronischen Schalter der Halbbrücken werden für die Abschaltung des Motors und damit zur Unterbrechung bzw. der deutlichen Reduzierung der Stromzuführung zum Frequenzumrichter genutzt, wenn ein Fehlerfall auftritt, der zu einer Überlastung der Bauteile führen würde. Alternativ kann auch mittels eines gesteuerten elektromechanischen Schalters, beispielsweise Relais, die gesamte Stromzufuhr zum Eingang des Frequenzumrichters oder der Gleichspannungszwischenkreis unterbrochen werden.

In einer insgesamt zweckmäßigen Ausführung umfasst die Steuereinrichtung des Frequenzumrichters einen Mikrocontroller, der ferner mit einzelnen Erfassungsmitteln zur Erfassung der einzelnen Phasenströme zusammenwirkt, um den Summenstrom zu ermitteln. Damit ist ein sehr einfacher Aufbau möglich.

Um auf einfache Weise für den Mikrocontroller verarbeitbare Eingangssignale bereitzustellen, umfassen die Erfassungsmittel zur Erfassung der jeweils einzelnen Phasenströme einen Spannungsteiler und/oder ferner einen Verstärker zur Aufbereitung des gemessenen Signals für den Mikrocontroller.

In einer insgesamt zweckmäßigen Ausführung umfasst der Mikrocontroller bzw. die Steuereinrichtung einen Speicher, der ein Computerprogramm beinhaltet zur Bearbeitung bzw. zum Ablauf durch den Mikrocontroller, um die Funktion der Vorrichtung zum Ermitteln des Stromes in zumindest einer Zuführungsleitung entsprechend einer der vorstehend beschriebenen Ausführungen bereitzustellen.

Die Erfindung betrifft ein Mechatronisches System, umfassend einen Frequenzumrichter entsprechend einer Ausführung wie oben beschrieben und einen durch den Frequenzumrichter bestromten Motor. Das mechtronische System ist dabei als funktionale Einheit anzusehen, in der die Parameter für die Bauteile, die Motorlasten und die Anforderungen für die Motoraktivitäten bekannt sind und für die Festlegung der Grenzwerte sowie als Rechengrößen zum Berechnen bzw. ermitteln der Temperatur des Frequenzumrichters, des Motors bzw. der Motorwicklungen und/oder einzelner Bauteile, wie beispielsweise das Dämpfungselement in der Versorgungsleitung zum Frequenzumrichter, verwendet werden. Insgesamt ist es zweckmäßig, dass der Frequenzumrichter mittels einer Dateneingabe oder Signaleingabe die Vorgaben bzw. Sollwerte für den Antrieb des Motors erhält.

Die Erfindung betrifft ferner ein Elektrisches Gerät, wie Waschmaschine, Trockner, Geschirrspüler, Kühlschrank, Dunstabzugshaube oder Gargerät, welches zumindest einen motorischen Antrieb umfasst, wobei der motorische Antrieb ein entsprechendes mechatronisches System umfasst. Dabei werden vorn der Steuereinrichtung des Haushaltgerätes Signale oder Daten an den Frequenzumrichter übermittelt, die die Vorgaben für die Motoraktivität beinhalten. Die Vorgaben werden dabei in der Regel vom Ablauf eines Haushaltgeräteprogrammes bestimmt.

Ein Ausführungsbeispiel der Erfindung ist in den Zeichnungen rein schematisch dargestellt und wird nachfolgend näher beschrieben. Es zeigen

Fig. 1     eine Waschmaschine als elektrisches Gerät;
Fig. 2:    einen skizzierte Schaltungsanordnung eines Frequenzumrichters mit dem Motor und
Fig. 3:    drei Diagramme zur Veranschaulichung der Wirkweise der Überwachungsfunktion

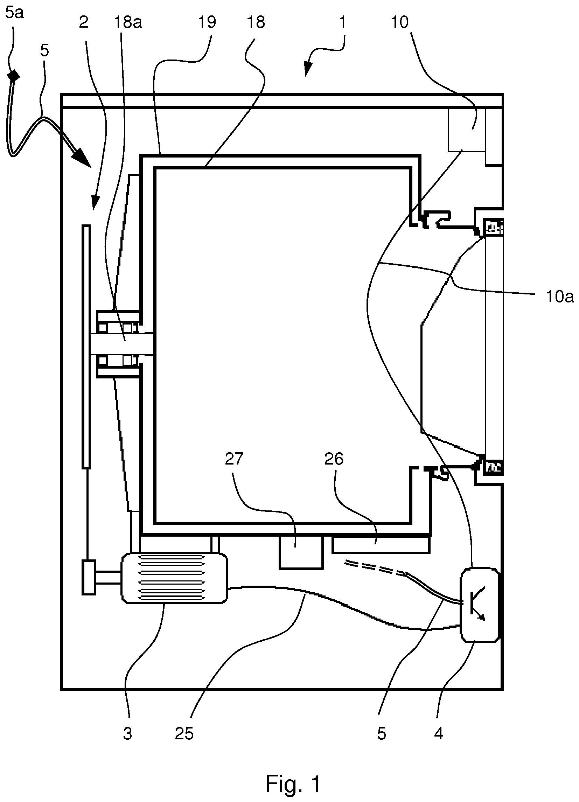

In Fig. 1 ist eine Waschmaschine 1 in einer Schnittdarstellung in der betriebsgemäßen Lage aufskizziert. Die Waschmaschine 1 umfasst einen Laugenbehälter 19, in dem eine im Wesentlichen horizontal drehende Trommel 18 angeordnet ist. Die Trommel 18 bzw. die Trommelwelle 18a, wird mit Hilfe eines Motors 3 und eines Antriebssystems 2 angetrieben. Der Motor 3 wird durch einen Frequenzumrichter 4, angesteuert und ist mittels eines Kabels 25 an dem Frequenzumrichter 4 angeschlossen. In diesem Beispiel wird ein bürstenloser Synchronmotor, hier ein sogenannter bürstenloser Motor mit permanentmagneterregtem Rotor (BLPM) verwendet, wobei der Frequenzumrichter 4 die Leistung oder Bestromung für den Motor 3 bereitstellt. Die Steuerbefehle erhält der Frequenzumrichter 4 von der Programmsteuerung 10, die mittels einer Datenleitung 10a mit dem Frequenzumrichter 4 verbunden ist. Die Waschmaschine 1 umfasst ferner ein Zuführungskabel 5, das in betriebsbereiter Situation mittels eines Steckers 5a an das Hausversorgungsnetz, in Europa überwiegend ca. 230 V, angeschlossen ist. Das Versorgungskabel 5 ist in das Innere des Gerätes 1 geführt, wobei die Versorgung mittels Schalter oder Verteiler auf die einzelnen Verbraucher, wie Heizkörper 56, Ablaufpumpe 27 und / oder den Frequenzumrichter 4 für den Antriebsmotor 3 geführt ist.

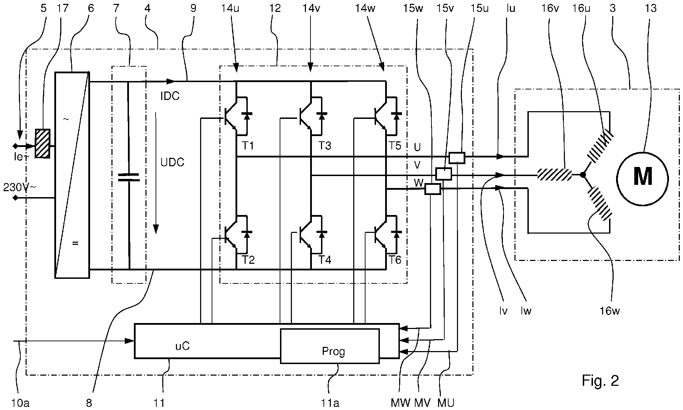

In der Fig. 2 ist die Anordnung des Frequenzumrichters 4 zur Bestromung des Motors 3 aufskizziert. Da der Frequenzumrichter hinsichtlich seiner Dimensionierung auf den Motor 3 bzw. auf die Wicklungsparameter abgestimmt ist, kann diese Kombination als mechatronisches System bezeichnet werden. Die am Eingang des Umrichters 4 angelegte Versorgungsspannung 5 (beispielsweise 230V~) wird mit einem Gleichrichter 6 in eine Gleichspannung mit einem Pluspol 9 und einem Minuspol 8 gleichgerichtet. Die Gleichspannung im Gleichspannungszwischenkreis 7 liegt hierbei im Bereich von 230 V bis 325 V, wobei sich im Gleichspannungszwischenkreis 7 der Strom IDC einstellt. Bei anderen Werten für die zugeführte Versorgungsspannung 5 würden sich entsprechend andere Werte für die gleichgerichtete Spannung im Gleichspannungszwischenkreis 7 einstellen. An dem Gleichspannungszwischenkreis 7 ist der Wechselrichter 12 angeschlossen, der für jede Phase U, V, W des Motors jeweils eine sogenannte Halbbrücke 14u, 14v, 14w besitzt. Die Halbbrücken 14u, 14v, 14w schalten mit Hilfe von Transistoren T1 bis T6 den Motorstrom IU, IV, IW in den Phasen U, V, W, wobei eine Pulsweitenmodulation verwendet wird, die zur Bereitstellung von sinusförmigen Strömen IU, IV, IW oder Gleichströmen in den Phasen U, V, W dient. Als Motor 3 wird in diesem Beispiel ein 3-Phasen Motor mit einer 3-strängigen Statorwicklung 16 verwendet, die sternförmig ausgeführt ist. Im Gleichspannungszwischenkreis 7 ist die Mikroprozessorsteuerung 11, die dazu ausgebildet ist, die Halbbrücken 14u, 14v, 14w abhängig von den erfassten Werten anzusteuern, um die einzelnen Wicklungen 16u, 16v, 16w für den Betrieb des Motors 3 zu bestromen. Der Frequenzumrichter 4 umfasst ferner für die einzelnen Phasenströme IU, IV, IW jeweils eine Erfassungseinrichtung 15u, 15v, 15w, die die Phasenströme als Signal an die Mikroprozessorsteuerung 11 weiterleitet, damit sie aufgrund der erfassten Werte die Halbbrücken 14u, 14v, 14w entsprechend ansteuern kann. Die Erfassungseinrichtungen 15u, 15v, 15w sind ferner dazu eingerichtet, die ein Maß für die Leistung bzw. der einzelnen Wicklung 16u, 16v, 16w zugeführten Strom IU, IV, IW als Signal MU, MV, MW dem Mikrocontroller 11 zuzuführen.

Die jeweiligen Erfassungseinrichtungen 15u, 15v, 15w umfassen in einer einfachen Ausführung einen Spannungsteiler, um in Verbindung mit einem Verstärker bzw. Operationsverstärker ein für den Mikrocontroller 11 verwertbares Signal MU. MV, MW zu erzeugen. Der Mikrocontroller 11 umfasst ferner einen Speicher 11a bzw. wirkt mit diesem zusammen, der ein Computerprogramm Prog beinhaltet zur Bearbeitung durch den Mikrocontroller 11, um die Funktion des Frequenzumrichters 4 durch entsprechendes Ansteuern der Halbbrücken 14u, 14v, 14w und die Funktion der Vorrichtung zur Erfassung des dem Frequenzumrichters 4 zugeführten Versorgungsstromes bzw. einer möglichen Erwärmung bereitzustellen. In Fig. 2 ist ferner zu erkennen, dass in zumindest einer Phase der Zuführungsleitung 5 ein Dämpfungselement 17 angeordnet ist, das die Ausbreitung von netzharmonischen Oberwellen in das Versorgungsnetz bis zu einem vorgegebenen Grad verhindert. In einer einfachen Ausführung besteht das Element 5a aus einer entsprechend dimensionierten Spule oder Drossel.

Insgesamt ergibt sich folgende Funktionsweise: das Dämpfungselement 17 sitzt im Netzeingang 5 des Frequenzumrichters 4. Es kann aber auch wahlweise hinter dem Gleichrichter 6 im Gleichspannungszwischenkreis 9 angeordnet sein. Das Dämpfungselement 17 bzw. die Netzrückwirkungsdrossel ist gewöhnlich so ausgelegt, dass sie bei maximaler Motordauerleistung nicht zu heiß wird. Wenn aber der Motor 3 z. B. durch Überlast deutlich mehr Leistung aufnimmt, kann es zu einem Überhitzen der Dämpfungselementes 17 kommen. Ausschlaggebend für die Erwärmung des Dämpfungselementes 17 ist der Strom, der durch das Dämpfungselement 17 fließt. Der durch das Dämpfungselement 17 fließende Strom le lässt sich relativ einfach aus der abgegebenen Motorleistung und der Zwischenkreisspannung UDC berechnen.

Die aufgenommene Motorleistung bzw. die durch den Frequenzumrichter 4 bereitgestellte Motorleistung wird in einer bevorzugten bzw. zweckmäßigen Ausführung wie folgt berechnet:

$$P\_Motor = I\_u \cdot U\_u + I\_V \cdot U\_V + I\_W \cdot U\_W$$

PMotor     aufgenommene Motorleistung

IU     Strom in der Phase U

UU     Spannung der Phase U

Die drei Phasenströme IU, IV, IW werden, wie Fig. 2 zu sehen, direkt gemessen. Die jeweilige Phasenspannung wird nicht direkt gemessen, sondern aus der Zwischenkreisspannung und der Schaltzeit der Pulsweitenmodulation für die Ansteuerung der Transitoren T1 bis T6 der Halbbrücken 14u, 14v, 14w in der jeweiligen Phase gerechnet. Somit ergibt sich für die Phasenspannung Uu folgender Zusammenhang:

$$Uu = UDC * D\_U,$$

wobei

UDC die Zwischenkreisspannung ist und Du der sogenannte "duty cycle" der Phase U, also Einschaltdauer der Spannung bzw. des Stromes lu für die eine Wicklung bzw. Phase Uu. Entsprechnedes gilt für die Phase v und w. Die Spannung UDC wird nicht komplett auf die Phase U geschaltet, sondern über eine Puls Weiten Modulation (PWM), die durch den zeitlichen Verlauf der Ansteuerung des Halbbrücken 14u, 14v, 14w mittels des Mikrocontrollers 11 bereitgestellt wird. Dadurch kann man die Phase U mit einer Spannung zwischen Null und UDC beaufschlagen. Mit Hilfe der bekannten Parameter für die Motorwicklung 16u, gegebenenfalls weiterer Motorparameter und der sich daraus einstellenden Leistung kann man nun nach folgender Formel den Strom le berechnen, der durch das Dämpfungselement 5a fließt:

$$Ie = K*IDC=K*P\_Motor/U\_DC$$

le          Strom durch das Dämpfungsglied
IDC         Strom im Zwischenkreis
PMotor      aufgenommene Motorleistung
UDC         Spannung im Gleichstromzwischenkreis
K = f(IDC)  Korrekturfaktor: Strom im Zwischenkreis - Strom im Netzeingang

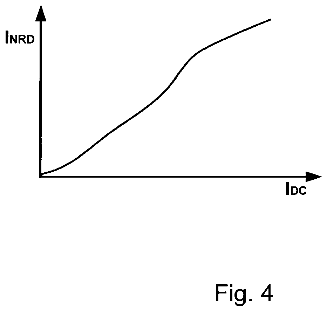

Der Korrekturfaktor K ist nicht ein fixer Wert, sondern stellt eine nichtlineare Kennlinie dar, die das Verhältnis von IDC zu le beschreibt. Das Verhältnis von IDC zu le (Effektiv) kann bei konstanter Netzspannung beispielweise schemenhaft so aussehen, wie in Fig. 4

Der Einfluss der Netzspannung auf der Leitung 5 auf den Korrekturfaktor K ist relativ gering und kann in den meisten Fällen vernachlässigt werden, da die Netzspannung, beispielsweise 230 V effektiv, sich normalerweise nur geringfügig ändert. Auch der Korrekturfaktor K kann in einigen Fällen weglassen werden. Je nach Anwendung und Genauigkeitsanforderungen muss man entscheiden, inwieweit man diesen Faktor K berücksichtigt oder nicht. In der weiteren Betrachtung wird der Korrekturfaktor K vernachlässigt, so dass als den durch das Dämpfungselement 17 fließende Strom le mit IDC gleichgesetzt werden kann. Setzt man nun in die Formel für die Berechnung des Eingangsstromes le die Motorleistung bzw. die vom Umrichter 4 aufgenommene Leistung ein, so kürzt sich die Zwischenkreisspannung raus:

$$IDC=P\_Motor/UDC =(lu \times Uu + lv \times Uv+lw \times Uw) / UDC =( UDC \times (lu \times Du + lv \times Dv + lw \times Dw)) / UDC$$

damit ergibt sich:

$$IDC=lu \times Du + lv \times Dv + lw \times Dw$$

Somit lässt sich der Strom le durch das Dämpfungselement 17 mithilfe der gemessenen Phasenströme Iu, Iv, Iw und den bekannten Schaltzeiten berechnen.

Mithilfe des durch das Dämpfungselement 17 fließenden Stromes le lässt sich nun die Temperatur des Dämpfungselementes 17, des Frequenzumrichters 4 oder des Motors 3 berechnen und überwachen. In diesem Beispiel wird die Temperatur des sicherheitsrelevanten Dämpfungselementes 17 überwacht. Zur Ermittlung der Temperatur wird ein einfaches $I^2t$-Modell verwendet. Das $I^2t$-Modell ist ein gängiges Verfahren in der Technik und bedeutet, dass der Augenblickswert des Stromes le quadriert und über die Zeit integriert wird. Die Verlustleistung PNRD des Dämpfungselementes 17 berechnet sich wie folgt:

$$PNRD= \int le^2\ dt \times Rnrd$$

PNRD    Verlustleistung des Dämpfungselementes
le      Strom durch das Dämpfungselement
Rnrd    Wirkwiderstand des Dämpfungselementes bzw. Drossel 17

Der zeitliche Verlauf der Verlustleistung PNRD entspricht zumindest in etwa dem zeitlichen Verlauf der Temperatur. Somit lässt sich der Temperaturverlauf des Dämpfungselementes 17 mit dem $I^2$t-Modell berechnen. Zunächst wird der Verlustleistungsanteil oberhalb des erlaubten Dauerstromes berechnet:

$$\Delta IDC^2 = IDC^2 - IDCmax^2$$

IDC          Strom im Zwischenkreis

IDCmax     Rechengröße für einen max. zulässigen Strom, bei dessen

Überschreitung eine unzulässige Übererwärmung des Dämpfungselementes 17 verursacht wird.

Der erlaubte Dauerstrom ist so definiert, dass bei diesem Strom das Dämpfungselement 17 knapp unterhalb des zulässigen Temperaturlimits liegen würde. Der nun errechnete $\Delta IDC^2$-Wert wird anschließend in Abhängigkeit des sich ergebenden Vorzeichens aus der oben genannten Differenz integriert:

$$(IDC\ Integral\ )^2\ (t) = \{\ (\int[\![\Delta IDC^2\ dt]\!]\ bei\ \Delta IDC^2 > 0)\ und\ (\int[\![(\Delta IDC^2)/d\ dt]\!]\ bei\ \Delta IDC^2 \leq 0)$$

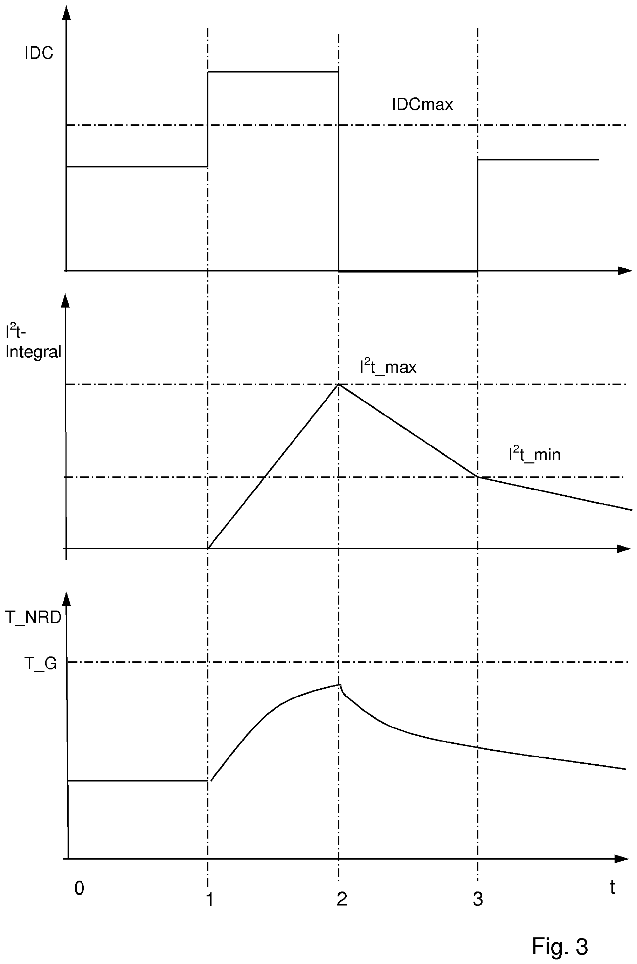

Durch die zusätzliche Skalierung mit d (d > 1) bei negativem $\Delta IDC^2$-Wert erfolgt das Dekrementieren langsamer als das Inkrementieren. Der I(DC Integral)^2 (t)-Wert wird auf minimal 0 begrenzt. Überschreitet der (IDC Integral(t))^2 einen oberen Grenzwert wird der Motor 3 durch Sperrung der Halbbrücken 14u, 14v, 14w abgeschaltet, bis der Wert (IDC Integral(t))^2 unterhalb eines unteren Grenzwertes gefallen ist. Das Diagramm gemäß Fig. 3 veranschaulicht den hier erläuterten Sachverhalt. Wie bereits vorstehend erwähnt, kann die Abschaltung auch zentral mittels eines Relais im Zuführungskabel oder Leitung 5 des Frequenzumrichters 4 oder durch Unterbrechung im Zwischenkreis 9 erfolgen.

Zu Beginn ab dem Zeitpunkt t=0 ist der Strom IDC oder le kleiner als der vorgegebene Grenzwert IDCmax. Dadurch ist das I2t-Integral Null, wodurch eine konstante, zulässige Erwärmung bzw. Temperatur für das Bauteil repräsentiert ist. Bei t=1 tritt ein Überlastfehler am Motor 3 ein und der IDC steigt sprunghaft an und übersteigt den Grenzwert IDCmax.. Somit steigt auch die Temperatur des Dämpfungselementes 17 an. Auch das I2t-Integral steigt an. Bei t=2 erreicht das I2t-Integral den I2t-Maximalwert, der ebenfalls ein vordefinierter Grenzwert ist. Als sicherheitsrelevante Reaktion wird hierbei der Motor 3 abgeschaltet, sodass ab dem Zeitpunkt t=2 kein Strom den einzelnen Phasen 14u, 14v, 14w zugeführt wird. Dadurch wird auch der Strom IDC oder le zu Null. Das I2t-Integral und auch die Temperatur TNRD des Dämpfungselementes 17 nehmen ab. Aufgrund der Skalierung beim Abintegrieren (Dekrementieren) ist das Gefälle des I2t-Integrals deutlich geringer als die Steigung zwischen den Zeitpunkten t=1 und t=2. Zum Zeitpunkt t=3 erreicht das I2t-Integral den I2t-Minwert, also einen weiteren vordefinierten unteren Grenzwert, und der Motor 3 wird wieder mittels der Halbbrücken 14u, 14v, 14w bestromt und dadurch aktiviert, da sich aufgrund des vorherigen Zeitraumes t=2 bis t=3 der Frequenzumrichter 4, das Dämpfungselement 17 oder der Motor 3 entsprechend abgekühlt hat. Ein Überlastfehler für den Motor 3 kann nun deaktiviert werden, da sich alle Komponenten des Antriebs und der Ansteuerung im zulässigen Temperatur- oder Lastbereich befinden. Dadurch nimmt der Wert des I2t-Integral weiter ab, etwa proportional bzw. zumindest tendenziell zum Temperaturabfall des entsprechend überwachten Bauteils 17, 3, 4. Im dritten Diagramm der Fig. 3 ist ferner skizziert, dass durch das vorzeitige Abschalten des Motors 3 im Überlastfall der Temperaturgrenzwert TG, ab dem eine Zerstörung oder Aufflammen eines Bauteils 17, 3, 4 möglich ist, nicht erreicht wird.

**Patentansprüche**

1. Mechatronisches System, umfassend:

  - einen einphasigen oder mehrphasigen elektrischen Motor (3);
  - einen Frequenzumrichter (4) zum Betreiben des Motors (3), umfassend einen Gleichrichter (6), der über eine Zuführungsleitung (5) an ein Wechselstromnetz angeschlossen werden kann, einen Wechselrichter (12) mit gesteuerten Halbbrücken (14u, 14v, 14w) zum Ein- und Ausschalten der Stromzufuhr für die eine oder die mehreren Wicklungen (16u, 16v, 16w) des Motor (3), und eine Steuereinrichtung (11) zum Ansteuern der Halbbrücken (14u, 14v, 14w);
  - jeweils eine Erfassungseinrichtung (15u, 15v, 15w) für jede der Wicklungen (16u, 16v, 16w) zur Erfassung des einzelnen Phasenstroms (Iu, Iv, Iw);

- ein Dämpfungselement (17) in der Zuführungsleitung (5) zur Dämpfung von in die Zuführungsleitung (5) rückindizierten Oberwellen, wobei das Dämpfungselement (17) so ausgelegt ist, dass es bei maximaler Motordauerleistung knapp unterhalb des zulässigen Temperaturlimits liegt;

wobei die Steuereinrichtung (11) dazu eingerichtet ist

- einen Summenstrom (IDC) anhand der einzeln erfassten Phasenströme (Iu, Iv, Iw) zu ermitteln; und
- die Stromzufuhr zu den einzelnen Wicklungen (16u, 16v, 16w) durch Abschalten der Halbbrücken (14u, 14v, 14w) zu unterbinden oder zu unterbrechen, wenn der Summenstrom (IDC) einen maximal zulässigen Strom (IDCmax) überschreitet, bei dessen Überschreitung eine unzulässige Übererwärmung des Dämpfungselements (17) verursacht wird.

2. Mechatronisches System nach Anspruch 1,
   **dadurch gekennzeichnet,**
   **dass** das Dämpfungselement (17) eine in die Zuführungsleitung (5) geschaltete Drossel oder Spule umfasst.

3. Mechatronisches System nach einem der Ansprüche 1 bis 2,
   wobei die Steuereinrichtung (11) einen Mikrocontroller (uC) umfasst, der mit den Erfassungsmitteln (15u, 15v, 15w) zur Erfassung der einzelnen Phasenströme (Iu, Iv, Iw) zusammenwirkt, um den Summenstrom (IDC) zu ermitteln.

4. Mechatronisches System nach Anspruch 3,
   wobei die Erfassungsmittel (15u, 15v, 15w) zur Erfassung der jeweils einzelnen Phasenströme (Iu, Iv, Iw) jeweils einen Spannungsteiler und/oder ferner einen Verstärker zur Aufbereitung des gemessenen Signals für den Mikrocontroller (uC) umfassen.

5. Mechatronisches System nach einem der Ansprüche 1 bis 4, wobei die Steuereinrichtung (11) dazu eingerichtet ist, die thermische Belastung des Dämpfungselementes (17) zu ermitteln durch

$$\int IDC^2(t) = \begin{cases} \int \Delta IDC^2 \, dt \ bei \ \Delta IDC^2 > 0 \\ \int \frac{\Delta IDC^2}{d} \, dt \ bei \ \Delta IDC^2 \leq 0 \end{cases}$$

wobei

$\Delta IDC^2 = IDC^2 - IDC_{max}^2$;
$IDC_{max}$ maximal zulässiger Strom;
$d > 1$; und
$\int IDC^2(t) \geq 0$; und

die Stromzufuhr zu den einzelnen Wicklungen (16u, 16v, 16w) durch Abschalten der Halbbrücken (14u, 14v, 14w) zu unterbinden oder zu unterbrechen, wenn $\int IDC^2(t)$ einen vordefinierten Grenzwert $I^2t_{max}$ überschreitet, und die Stromzufuhr zu den einzelnen Wicklungen (16u, 16v, 16w) mittels der Halbbrücken (14u, 14v, 14w) wieder zu aktivieren, wenn $\int IDC^2(t)$ einen vordefinierten Grenzwert $I^2t_{min}$ unterschreitet

6. Elektrisches Gerät (1), wie Waschmaschine, Trockner, Geschirrspüler, Kühlschrank, Dunstabzugshaube oder Gargerät, umfassend ein mechatronisches System gemäß einem der Ansprüche 1 bis 5.

## Claims

1. Mechatronic system comprising:

   - a single-phase or multi-phase electric motor (3);
   - a frequency converter (4) for operating the motor (3), comprising a rectifier (6) that can be connected to an AC network via a feed line (5), an inverter (12) having controlled half bridges (14u, 14v, 14w) for switching on and off the current supply for the one or more windings (16u, 16v, 16w) of the motor (3), and a control device (11) for activating the half bridges (14u, 14v, 14w);

- a detecting device (15u, 15v, 15w) for each of the windings (16u, 16v, 16w) for detecting their individual phase current (Iu, Iv, Iw);
- a damping element (17) in the feed line (5) for damping harmonics back-indexed into the feed line (5), the damping element (17) being designed to be just under the permissible temperature limit at maximum continuous output of the motor;

wherein the control device (11) is set up

- to determine a total current (IDC) using the individually detected phase currents (Iu, Iv, Iw); and
- to stop or interrupt the current supply to the individual windings (16u, 16v, 16w) by switching off the half bridges (14u, 14v, 14w) if the total current (IDC) exceeds a maximum permissible current (IDCmax), the exceeding of which causes impermissible overheating of the damping element (17).

2. Mechatronic system according to claim 1,
   **characterised in that**
   the damping element (17) comprises a choke or coil connected into the feed line (5).

3. Mechatronic system according to either claim 1 or claim 2,
   wherein the control device (11) comprises a microcontroller (uC) that interacts with the detecting means (15u, 15v, 15w) for detecting the individual phase currents (Iu, Iv, Iw) in order to determine the total current (IDC).

4. Mechatronic system according to claim 3,
   wherein each detecting means (15u, 15v, 15w) for detecting each individual phase current (Iu, Iv, Iw) comprises a voltage divider and/or also an amplifier for processing the measured signal for the microcontroller (uC).

5. Mechatronic system according to any of claims 1 to 4, wherein the control device (11) is set up to determine the thermal load of the damping element (17) using the formula

$$\int IDC^2(t) = \begin{cases} \int \Delta IDC^2\, dt \ bei\ \Delta IDC^2 > 0 \\ \int \frac{\Delta IDC^2}{d}\, dt\ bei\ \Delta IDC^2 \leq 0 \end{cases}$$

in which

$\Delta IDC^2 = IDC^2 - IDC_{max}^2$;
$IDC_{max}$ is the maximum permissible current;
$d > 1$; and
$\int IDC^2(t) \geq 0$; and
to stop or interrupt the current supply to the individual windings (16u, 16v, 16w) by switching off the half bridges (14u, 14v, 14w) if $\int IDC^2(t)$ exceeds a predefined threshold value $I^2t_{max}$, and to reactivate the current supply to the individual windings (16u, 16v, 16w) by means of the half bridges (14u, 14v, 14w) if $\int IDC^2(t)$ falls below a predefined threshold value $I^2t_{min}$.

6. Electrical appliance (1), such as a washing machine, dryer, dishwasher, refrigerator, extractor hood or cooking appliance, comprising a mechatronic system according to any of claims 1 to 5.

**Revendications**

1. Système mécatronique, comprenant :

   - un moteur (3) électrique monophasé ou polyphasé ;
   - un convertisseur de fréquence (4) pour faire fonctionner le moteur (3), comprenant un redresseur (6) qui peut être raccordé à un réseau de courant alternatif par le biais d'une ligne d'amenée (5), un onduleur (12) avec des demi-ponts (14u, 14v, 14w) commandés pour la mise en et hors circuit de l'amenée de courant pour l'enroulement ou les plusieurs enroulements (16u, 16v, 16w) du moteur (3), et un système de commande (11) pour le pilotage des demi-ponts (14u, 14v, 14w) ;
   - respectivement un système de détection (15u, 15v, 15w) pour chacun des enroulements (16u, 16v, 16w) pour la détection du courant de phase (Iu, Iv, Iw) individuel ;
- un élément d'atténuation (17) dans la ligne d'amenée (5) pour l'atténuation d'harmoniques rétro-indexées dans la ligne d'amenée (5), dans lequel l'élément d'atténuation (17) est conçu de telle sorte que, pour une puissance permanente de moteur maximale, il est légèrement au-dessous de la limite de température admissible ;

dans lequel le système de commande (11) est agencé pour

- déterminer un courant total (IDC) à l'aide des courants de phase (Iu, Iv, Iw) détectés individuellement ; et
- pour empêcher ou interrompre l'amenée de courant aux enroulements (16u, 16v, 16w) individuels par la mise hors circuit des demi-ponts (14u, 14v, 14w) quand le courant total (IDC) passe au-dessus d'un courant admissible maximal (IDCmax), dépassement qui provoque une surchauffe inadmissible de l'élément d'atténuation (17).

2. Système mécatronique selon la revendication 1,
   **caractérisé en ce que**
   l'élément d'atténuation (17) comprend un self ou une bobine branchée sur la ligne d'amenée (5).

3. Système mécatronique selon l'une des revendications 1 à 2,
   dans lequel le système de commande (11) comprend un microcontrôleur (uC) qui coopère avec les moyens de détection (15u, 15v, 15w) destinés à la détection des courants de phase (Iu, Iv, Iw) individuels pour déterminer le courant total (IDC).

4. Système mécatronique selon la revendication 3,
   dans lequel les moyens de détection (15u, 15v, 15w) destinés à la détection des courants de phase (Iu, Iv, Iw) respectivement individuels comprennent respectivement un diviseur de tension et/ou en outre un amplificateur pour le traitement du signal mesuré pour le microcontrôleur (uC).

5. Système mécatronique selon l'une des revendications 1 à 4, dans lequel le système de commande (11) est agencé pour déterminer la contrainte thermique de l'élément d'atténuation (17) par

$$\int IDC^2(t) = \begin{cases} \int \Delta IDC^2 \, dt \text{ pour } \Delta IDC^2 > 0 \\ \int \frac{\Delta IDC^2}{d} \, dt \text{ pour } \Delta IDC^2 \leq 0 \end{cases}$$

où

$\Delta IDC^2 = IDC^2 - IDC_{max}^2$;
$IDC_{max}$ est le courant admissible maximal ;
$d > 1$ ; et
$\int IDC^2(t) \geq 0$; et

pour empêcher ou interrompre l'amenée de courant aux différents enroulements (16u, 16v, 16w) par la mise hors circuit des demi-ponts (14u, 14v, 14w) quand $\int IDC^2(t)$ dépasse une valeur limite prédéfinie $I^2t_{max}$, et pour réactiver l'amenée de courant aux différents enroulements (16u, 16v, 16w) au moyen des demi-ponts (14u, 14v, 14w) quand $\int IDC^2(t)$ passe au-dessous d'une valeur limite prédéfinie $I^2t_{min}$.

6. Appareil électrique (1) tel que machine à laver, sécheur, lave-vaisselle, réfrigérateur, hotte aspirante ou appareil de cuisson, comprenant un système mécatronique selon l'une des revendications 1 à 5.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0247996 A2
- WO 2005109592 A1
- EP 2409630 A2
- US 6992448 B2